# FASCICULE DE BREVET EUROPEEN

(11) **EP 1 902 346 B1**
(45) Date de publication et mention de la délivrance du brevet: **23.06.2010**
(21) Numéro de dépôt: 06777619.5
(22) Date de dépôt: 06.07.2006
(51) Int. Cl.: G05D 1/00, B64C 13/16

(54) **PROCEDE ET DISPOSITIF POUR ALLEGER LES CHARGES SUR LA VOILURE D'UN AERONEF EN ROULIS**
VERFAHREN UND VORRICHTUNG ZUR LASTBELEUCHTUNG AUF DEM TRAGFLÄCHENSYSTEM EINES FLUGZEUGS IN ROLLBEWEGUNG
METHOD AND DEVICE FOR LIGHTENING LOADS ON THE WING SYSTEM OF AN AIRCRAFT IN ROLL MOTION

(30) Priorité: 08.07.2005 FR 0552110
(43) Date de publication de la demande: 26.03.2008
(73) Titulaire: AIRBUS OPERATIONS, 31060 Toulouse (FR)
(72) Inventeur: LIVET, Tania, F-31100 Toulouse (FR)
(74) Mandataire: Ilgart, Jean-Christophe
(86) Numéro de dépôt international: PCT/EP2006/063974
(87) Numéro de publication internationale: WO 2007/006725

(56) Documents cités:
- FR-A- 2 864 032
- US-A- 4 638 229
- US-A- 4 796 192
- US-A- 5 375 794

## Description

### DOMAINE TECHNIQUE

L'invention se rapporte à l'allègement des charges au niveau de la structure d'un aéronef. En particulier, l'invention concerne un procédé permettant de limiter les charges sur la voilure lors de manoeuvres latérales en roulis.

L'invention concerne également un dispositif permettant d'anticiper la réponse d'un avion à un ordre de manoeuvre, en particulier en roulis, afin d'alléger les charges sur la structure, notamment au niveau de la voilure.

### ÉTAT DE LA TECHNIQUE ANTÉRIEURE

Les différentes parties de la structure d'un aéronef sont dimensionnées pour pouvoir supporter certaines charges sans qu'il y ait apparition de déformations permanentes. Ces charges sont générées lors de toutes les manoeuvres de l'avion ; en particulier, elles peuvent être supérieures aux charges usuelles lorsque l'aéronef rencontre des turbulences importantes, lors d'erreurs de pilotage, en cas de manoeuvres inhabituelles, ou par des conditions extérieures exceptionnelles. Ces dépassements sont normalement au moins partiellement pris en compte pour la modélisation et le dimensionnement des différents éléments de la structure de l'aéronef, afin de déterminer des niveaux de charges autorisées sans risque.

De plus, pour les avions militaires notamment, l'étendue des manoeuvres à réaliser est souvent élargie par rapport à des conditions usuelles : vol à basse altitude, suivi de terrain, manoeuvre d'évitement,.... Lors de la conception d'un aéronef militaire, il a ainsi été noté que le taux de roulis devait être considéré comme paramètre influant pour le dimensionnement d'une voilure. En effet, les manoeuvres citées plus haut nécessitent un taux de roulis pouvant aller jusqu'à deux fois le taux de roulis d'un avion de transport civil; la charge appliquée sur la structure, et notamment le moment de flexion appliqué sur le bout de voilure, sont alors nettement plus importants que lors d'un vol habituel.

Par ailleurs, l'utilisation croissante d'ailettes d'extrémité de voilure (« *winglets* ») pour des avions qui en étaient dépourvus jusqu'alors peut elle aussi entraîner des charges sur les ailes dans des manoeuvres en roulis classiques. Ce paramètre de taux de roulis devrait donc être considéré également pour le dimensionnement de la structure dans des avions civils, notamment pour le bout de la voilure.

Jusqu'à présent, les caractéristiques de surcharge par rapport au dimensionnement ont fait l'objet de contrôles *a posteriori.* Ainsi, de façon habituelle, les dépassements de charge sont détectés par mesure d'un paramètre, notamment la vitesse : pour différentes vitesses déterminées grâce à des modèles de charge spécifiques à chaque zone de l'aéronef, une alarme est déclenchée lorsqu'un dépassement, par exemple de quatre noeuds, de la vitesse autorisée est détecté. Une amélioration de cette détection des excès de charge est décrite dans la demande de brevet FR 2864032, dans laquelle, outre la vitesse de l'avion, son facteur de charge vertical est pris en compte pour détecter un dépassement de la charge de dimensionnement au niveau d'une partie de structure d'un avion.

Ces procédés néanmoins n'interviennent qu'une fois que l'événement générateur de dépassement potentiel a eu lieu ; ils permettent simplement de signaler la nécessité de procéder à une inspection de maintenance de l'aéronef, afin de contrôler l'intégrité des structures après cette charge anormale.

Pour prendre en compte les différents paramètres et limiter les alarmes de dépassement de charge, une solution est un surdimensionnement de la voilure, par exemple en considérant le moment de flexion généré par un taux de roulis exceptionnel. Cependant, cette solution a pour conséquence directe une surcharge de la voilure, et donc une augmentation du poids de l'avion, ce qui engendre une diminution de ses performances.

Le brevet US 4, 796, 192 concerne uniquement la limitation de la charge appliquée sur les volets extérieurs 14, 16, 19 d'ailes d'un avion, en particulier en cas de roulis, à partir de la connaissance de la charge en elle-même.

### EXPOSÉ DE L'INVENTION

L'invention se propose de pallier les inconvénients concernant le dimensionnement de la voilure d'un aéronef suivant les conditions de fonctionnement.

Plus généralement, l'invention se propose de réduire certaines charges lors de roulis provoqué, et donc d'éviter un surdimensionnement de la voilure les prenant en compte pour des manoeuvres latérales en roulis.

L'invention concerne ainsi, sous un de ses aspects, un procédé permettant d'alléger les charges occasionnées par un paramètre de commande, notamment le taux de roulis. Le paramètre est tout d'abord comparé avec une valeur seuil, qui peut par exemple être égale à une proportion, comme 70 %, de la commande générant la charge maximale autorisée ou du taux de roulis maximum commandé autorisé. Lorsque le paramètre est inférieur au seuil, l'ordre de commande appliqué correspond à ce paramètre : il lui est identique, ou peut être filtré par un filtre passe-bas suivant la réactivité demandée en début de manoeuvre. Dès que le paramètre dépasse le seuil, la différence est filtrée par un filtre passe-bas et ajoutée à l'ordre de commande correspondant à la valeur seuil. Il se produit ainsi une atténuation de la commande, qui permet d'anticiper un dépassement de la charge maximale autorisée. De préférence, si l'ordre de commande correspond à un filtrage du paramètre jusqu'à la valeur seuil, ce filtrage se fait avec une constante de temps inférieure à la constante de temps du filtre utilisé pour la différence.

Sous un autre aspect, l'invention concerne un dispositif adapté pour un tel procédé. Le dispositif comprend des moyens pour déterminer un paramètre de commande. Avantageusement, il s'agit de moyens associés à un système de commande permettant d'appliquer un ordre de commande, comme le roulis, depuis un organe, par exemple un manche d'aéronef, à une (ou plusieurs) gouverne comme un spoiler ou un aileron d'avion. Le dispositif comprend en outre des moyens pour calculer la différence entre le paramètre déterminé et une valeur seuil. Le dispositif est muni d'un premier filtre passe-bas pour filtrer cette différence si elle est positive ; il peut être muni d'un second filtre passe-bas pour filtrer soit la valeur seuil résiduelle, soit le paramètre de commande si la différence précitée est négative. Le dispositif comprend des moyens pour déterminer l'ordre de commande à appliquer, qui correspond à la somme entre les valeurs précédentes.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.
La figure 1 représente un diagramme fonctionnel d'un procédé selon l'invention.
La figure 2 illustre schématiquement les charges appliquées par une commande en roulis en fonction du temps, dans un cas usuel (1) et selon deux modes de réalisation de l'invention (2, 3).
La figure 3 montre le moment de flexion appliqué sur une voilure au cours du temps lors d'une manoeuvre classique de roulis latéral sur un avion, dans le cas usuel (1) et avec un filtrage selon l'invention (2).

### EXPOSÉ DÉTAILLÉ DE MODES DE RÉALISATION PARTICULIERS

L'invention s'applique à tout aéronef possédant un système de commandes de vol électriques, avec en particulier une liaison fonctionnelle entre l'organe permettant dé commander le roulis dans un avion et les gouvernes de roulis. Habituellement et de façon préférée, l'organe de commande du roulis est le manche de l'avion, et les gouvernes comprennent les ailerons et/ou l'aérofrein situé sur la voilure, appelé « spoiler » pour cette fonction de génération de roulis.

Il a été trouvé que le pic de charge maximale sur la voilure intervient à un moment bien particulier d'une manoeuvre de roulis, c'est-à-dire lorsque la réponse de l'avion à la commande donnée par le pilote au travers du manche avoisine un certain pourcentage de la commande maximale, qui correspond à la commande générant le pic de charge maximale dimensionnant la structure. Pour un avion militaire, ce pic de charge maximale peut apparaître entre 70 % et 100 % de la commande maximale appliquée en taux de roulis.

En connaissant la réponse de l'avion à une commande en roulis, il devient ainsi possible d'anticiper le dépassement de la charge maximale, et d'agir sur la commande envoyée au moment où la charge appliquée à la voilure devient égale à la charge maximale pour laquelle a été dimensionnée la voilure, ou légèrement avant que celle-ci ne soit dépassée. Cette action entraîne certes une légère dégradation des performances de l'avion mais permet de limiter la charge sur la voilure, pour atteindre un niveau inférieur ou égal à la charge maximale supportable, ce qui évite les dommages inhérents sur la structure et les opérations de maintenance exigées.

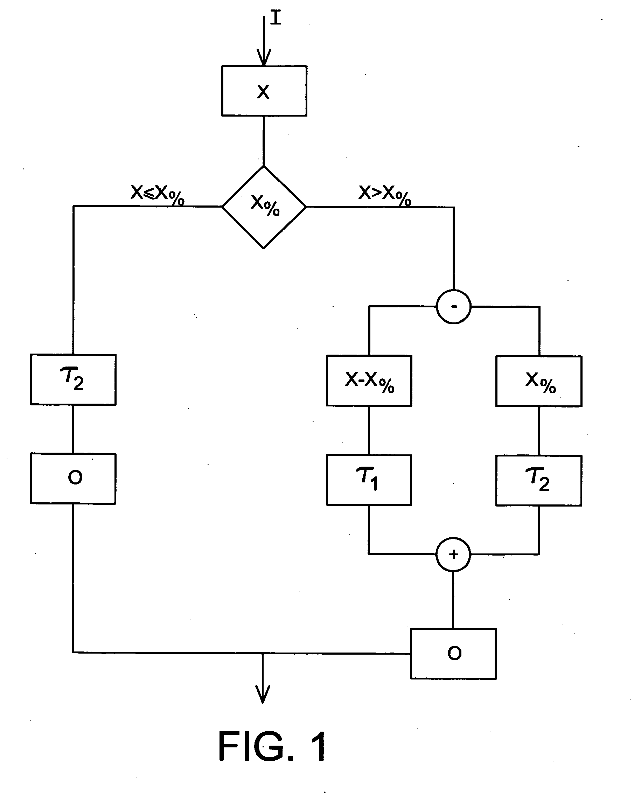

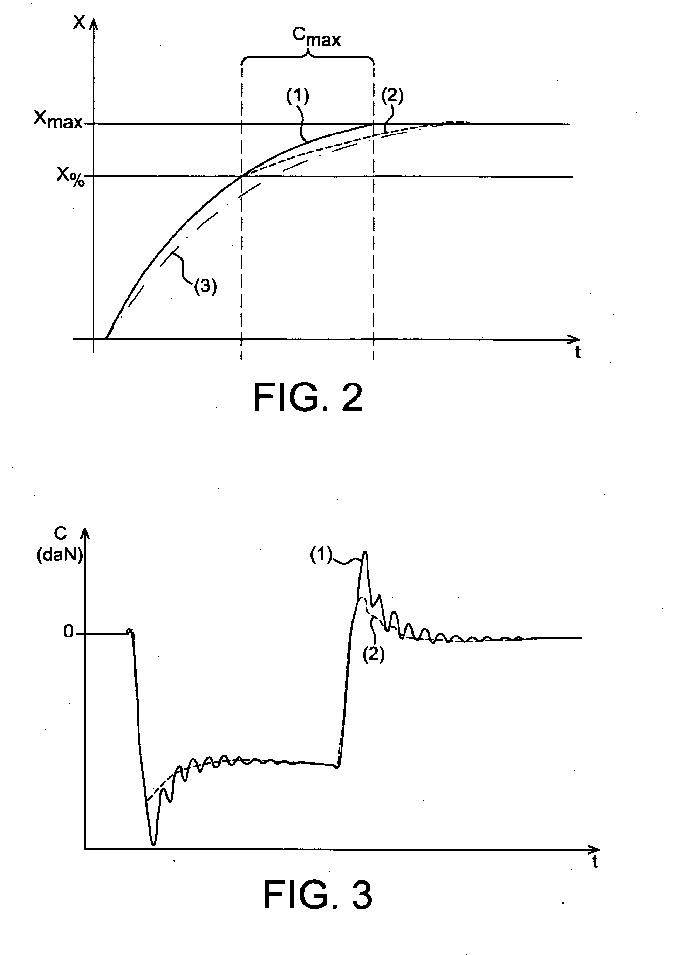

Ainsi, tel qu'illustré sur les figures 1 et 2, la commande de roulis X appliquée par l'intermédiaire de l'organe de commande en roulis de l'aéronef est mesurée par l'intermédiaire d'un dispositif couplé au système de commandes de vol. Cette détermination est continue ou effectuée à intervalles réguliers, par exemple entre 10 ms et 50 ms.

Par ailleurs, la commande de roulis maximum (limite Xₘₐₓ sur la figure 2) est généralement fixée par les contraintes de performance du cahier des charges de l'avion. Cependant, c'est au voisinage de cette valeur Xₘₐₓ que la charge C appliquée à la voilure atteint son niveau maximum ou dépasse une charge maximale Cₘₐₓ qui peut lui être appliquée sans risque d'endommagement.

De manière continue, ou de préférence à fréquence de l'ordre de 10 à 50 ms, la commande de roulis mesurée est comparée à un seuil X_{%}. Ce seuil est prédéfini en fonction de l'avion, de l'usage (en particulier civil ou militaire) qui est prévu,... de manière à rendre la procédé d'allègement de charges actif dès que les niveaux de charge atteints préconisent d'être réduits. Habituellement, il correspond à un certain pourcentage de la limite Xₘₐₓ, par exemple 70 % sur un avion militaire.

Tant que la commande en roulis X est inférieure ou égale au seuil X_{%}, la commande X peut être appliquée car aucune surcharge au niveau de la voilure n'est encore prévue.

Lorsque la commande en roulis X devient supérieure au seuil X_{%}, selon l'invention, une atténuation de la commande est prévue. En particulier, la différence entre la commande X et le seuil X_{%} est calculée, et le résultat est filtré par un premier filtre passe-bas de constante τ₁. L'ordre de commande O appliqué aux gouvernes de roulis est alors la somme entre cette différence filtrée et la commande correspondant à la valeur seuil X_{%}. Par rapport à une commande X classique non filtrée illustrée sur la courbe (1) de la figure 2, il y a ainsi une atténuation de l'ordre effectivement appliqué à la structure, et le dépassement de la charge maximale Cₘₐₓ est anticipé grâce à l'action sur la commande X envoyée au moment où la charge C appliquée à la voilure devient supérieure à la charge maximale Cₘₐₓ, ou légèrement avant : voir courbe (2).

Par ailleurs, et tel qu'illustré sur la courbe (3), il est possible également d'anticiper encore la surcharge et de procéder à un filtrage de la commande en roulis X à tout instant. Ainsi, même lorsque le paramètre X n'atteint pas le seuil X_{%}, la commande en roulis correspond au paramètre X filtré par un filtre passe-bas de deuxième constante de temps τ₂ : ainsi, la réponse de l'avion est anticipée, et la charge sur la voilure est retardée. Pour des exigences de performance, il est avantageux dans ce cas que la deuxième constante de temps soit inférieure à la première : τ₁ ≥ τ₂.

Le choix des paramètres d'altération de la commande, c'est-à-dire X_{%}, τ₁, τ₂, est optimisé pour respecter le cahier des charges de l'avion quant à ses performances. Par exemple, dans le cas d'un avion de transport civil (illustré par exemple par la courbe (3) de la figure 2), il n'est pas nécessaire que la réponse de l'avion à une commande en roulis du pilote suive strictement la commande, et le filtre passe-bas peut avoir une constante de temps τ₂ non nulle. Par exemple, pour un avion dont les performances peuvent tolérer un bref retard en sus du retard d'acquisition de l'ordre par les gouvernes dès le début de la commande, la valeur du seuil X_{%} peut être de l'ordre de 70 %, avec τ₁ = 1, 2 s et τ₂ = 0,1 s.

Par contre, pour un avion de transport militaire (par exemple illustré sur la courbe (2)) demandant une réponse très proche de la commande, il est préférable de choisir τ₂ égale à zéro, ce qui revient à supprimer le filtre passe-bas correspondant, pour que le pilote voie son avion réagir immédiatement à une commande en roulis, et qu'aucun retard ne soit ajouté à la loi de pilotage en début de manoeuvre. La limitation n'intervient de fait que lorsque la commande en roulis X devient supérieure au seuil X_{%}. Pour un avion dont les performances sont optimales au début de la commande, les valeurs peuvent ainsi devenir X_{%} = 0,7·Xₘₐₓ, τ₂ = 0, τ₁ = 0,6 s, ce qui permet d'engendrer une réduction de charge sur la voilure de l'ordre de 17 % sur le moment de flexion, ce qui correspond à un gain de masse non négligeable. Le résultat du procédé selon l'invention avec ces valeurs (X_{%} = 70 %, τ₂ = 0, τ₁ = 0,6 s) est illustré par exemple sur la courbe (2) en figure 3 pour un avion militaire lors d' une commande de roulis à Xₘₐₓ, avec pour référence la courbe (1) illustrant les charges normales pour la même procédure.

De même que la performance en début de manoeuvre dépend de la constante de temps τ₂, il est possible d'agir sur τ₁ pour améliorer le pourcentage de réduction de charge, aux détriments de la manoeuvrabilité de l'avion. De fait, les différents paramètres sont fortement liés aux réglages des lois de pilotage définies dans les calculateurs d'avion à commandes de vol électriques, et les critères d'utilisation prévus : un compromis acceptable peut être obtenu entre réduction de charge et manoeuvrabilité.

Pour réduire les charges latérales en manoeuvres de roulis, l'invention se propose ainsi d'introduire une loi de commande sur les ordres donnés au manche en intégrant une loi spécifique de réduction de charges entre l'organe de commande de roulis et les asservissements des lois de pilotage latéral, loi qui permet donc de gagner de la masse structurelle par la réduction de la charge générée.

Bien que décrit ici pour une réduction du moment appliqué en bout d'aile lors d'une manoeuvre de roulis exercée sur un organe de commande d'un avion, il est clair que le procédé s'applique sur tout autre organe de pilotage si cela permet de réduire les charges atteintes sur un composant de l'avion.

## Revendications

1. Procédé d'allégement des charges (C) sur un élément structurel d'un aéronef occasionnées par un paramètre de commande (X) **caractérisé en ce qu'**il comprend les étapes consistant à :
- comparer le paramètre (X) avec une valeur seuil (X_{%}) du paramètre,
- lorsque le paramètre est inférieur ou égal à la valeur seuil (X ≤ X_{%}), appliquer à l'organe une valeur de commande correspondant au paramètre de commande (X),
- lorsque le paramètre dépasse la valeur seuil (X > X_{%}) :
• filtrer la différence entre paramètre et valeur seuil (X - X_{%}) par un filtre passe-bas de première constante de temps (τ₁),
• appliquer à l'organe un ordre de commande correspondant à la somme entre la différence filtrée et la valeur de commande correspondant à la valeur seuil (X_{%}).

2. Procédé selon la revendication 1 dans lequel la valeur de commande correspond au paramètre ou à la valeur seuil filtrés par un filtre passe-bas de deuxième constante de temps (τ₂).

3. Procédé selon la revendication 2 dans lequel la deuxième constante de temps est inférieure à la première (τ₂ ≤ τ₁).

4. Procédé selon l'une des revendications 1 à 3 dans lequel le paramètre de commande (X) est le taux de roulis.

5. Procédé selon l'une des revendications 1 à 4 dans lequel la valeur seuil (X_{%}) est inférieure à 100 % de la commande correspondant à une charge maximale autorisée (Cₘₐₓ).

6. Dispositif d'allègement de la charge occasionnée par une commande sur un élément structurel d'aéronef **caractérisé en ce qu'**il comprend:
- des moyens pour déterminer un paramètre de commande (X),
- des moyens pour calculer la différence entre le paramètre de commande et une valeur seuil du paramètre de commande (X - X_{%}),
- un premier filtre passe-bas (τ₁) pour filtrer la différence calculée si elle est positive,
- des moyens pour déterminer l'ordre de commande qui correspond au paramètre de commande (X) si la différence calculée est négative, et qui est égal à la somme entre la différence filtrée et l'ordre correspondant à la valeur seuil si la différence est positive.

7. Dispositif selon la revendication 6 comprenant un deuxième filtre passe-bas (τ₂), permettant de déterminer l'ordre de commande correspondant à une valeur (X, X_{%}) par filtrage.

8. Dispositif selon l'une des revendications 6 ou 7 comprenant un système de commande permettant d'appliquer l'ordre de commande à une gouverne.

9. Dispositif selon la revendication 8 dans lequel le système de commande est électrique et les moyens pour déterminer le paramètre de commande lui sont associés.

10. Dispositif selon l'une des revendications 8 ou 9 dans lequel le système de commande est relié à un organe de commande tel un manche d'aéronef et à une gouverne telle un aileron d'aéronef.

## Claims

1. Method for reducing the loads (C) on a structural element of an aircraft due to a control parameter (X), **characterizing in that** it comprises steps consisting of:
- comparing the parameter (X) with a threshold value (X_{%}) of this parameter,
- when the parameter is less than or equal to the threshold value (X ≤ X_{%}), apply a control value to the device corresponding to the control parameter (X),
- when the parameter exceeds a threshold value (X > X_{%}):
• filter the difference between the parameter and the threshold value (X - X_{%}) using a lowpass filter with a first time constant (τ₁),
• apply a control order to the device corresponding to the sum of the filtered difference and the control value corresponding to the threshold value (X_{%}).

2. Method according to claim 1 in which the control order corresponds to the parameter or the threshold value filtered by a lowpass filter with a second time constant (τ₂)

3. Method according to claim 2 in which the second time constant is less than the first constant (τ₂ ≤ τ₁).

4. Method according to one of claims 1 to 3, in which the control parameter (X) is the roll rate.

5. Method according to one of claims 1 to 4 in which the threshold value (X_{%}) is less than 100% of the control corresponding to a allowable maximum load (Cₘₐₓ).

6. Device for reducing the load on a structural element of an aircraft due to a control, **characterizing in that** it comprises:
- means of determining a control parameter (X),
- means of calculating the difference between the control parameter and a threshold value of the control parameter (X - X_{%}),
- a first lowpass filter (τ₁) to filter the calculated difference if it is positive,
- means of determining the control order that corresponds to the control parameter (X) if the calculated difference is negative, and that is equal to the sum of the filtered difference and the order corresponding to the threshold value if the difference is positive.

7. Device according to claim 6 comprising a second lowpass filter (τ₂), to determine the control order corresponding to a value (X, X_{%}) by filtering.

8. Device according to either claim 6 or 7, comprising a control system to apply the control order to a control surface.

9. Device according to claim 8 in which the control system is electrical and the means of determining the control parameter are associated with it.

10. Device according to either claim 8 or 9 in which the control system is connected to a control device such as an aircraft stick and to a control surface such as an aircraft aileron.

## Patentansprüche

1. Verfahren zur Verminderung von Lasten (C) auf einem Strukturelement eines Luftfahrzeugs, die durch einen Steuerparameter (X) verursacht werden, **dadurch gekennzeichnet, dass** das Verfahren die folgenden Schritte umfaßt:
- vergleichen des Parameters (X) mit einem Schwellenwert (X_{%}) des Parameters,
- wenn der Parameter geringer als der Schwellenwert oder gleich dem Schwellenwert ist (X ≤ X_{%}) , Verwenden eines dem Steuerparameter (X) entsprechenden Steuerwerts für das Organ,
- wenn der Parameter den Schwellenwert übersteigt (X > X_{%}) :
• filtern der Differenz zwischen dem Parameter und dem Schwellenwert (X - X_{%}) durch ein Tiefpaßfilter mit einer ersten Zeitkonstante (τ₁),
• verwenden eines Steuerbefehls, der der Summe aus der gefilterten Differenz und dem dem Schwellenwert (X_{%}) entsprechenden Steuerwert entspricht, für das Organ.

2. Verfahren nach Anspruch 1, wobei der Steuerwert dem Parameter oder dem Schwellenwert, die durch ein Tiefpaßfilter mit einer zweiten Zeitkonstante (τ₂) gefiltert wurden, entspricht.

3. Verfahren nach Anspruch 2, wobei die zweite Zeitkonstante geringer als die erste ist (τ₂ ≤ τ₁).

4. Verfahren nach einem der Ansprüche 1 bis 3, wobei der Steuerparameter (X) der Rollgrad ist.

5. Verfahren nach einem der Ansprüche 1 bis 4, wobei der Schwellenwert (X_{%}) geringer als 100 % des Steuerbefehls, der der maximal zulässigen Last (Cₘₐₓ) entspricht, ist.

6. Vorrichtung zur Verminderung der Last, die durch einen Steuerbefehl verursacht ist, auf einem Strukturelement eines Luftfahrzeugs, **dadurch gekennzeichnet, dass** sie umfasst:
- mitteln zur Bestimmung eines Steuerparameters (X),
- mitteln zur Berechnung der Differenz zwischen dem Steuerparameter und einem Schwellenwert des Steuerparameters (X - X_{%}),
- ein erstes Tiefpaßfilter (τ₁) zum Filtern der berechneten Differenz, wenn diese positiv ist,
- mitteln zur Bestimmung des Steuerbefehls, der dem Steuerparameter (X) entspricht, wenn die berechnete Differenz negativ ist, und der gleich der Summe aus der gefilterten Differenz und dem dem Schwellenwert entsprechenden Befehl ist, wenn die Differenz positiv ist.

7. Vorrichtung nach Anspruch 6, die ein zweites Tiefpaßfilter (τ₂) umfasst, wobei der einem Wert (X, X_{%}) entsprechende Steuerbefehl durch Filtern bestimmt werden kann.

8. Vorrichtung nach einem der Ansprüche 6 oder 7, die ein Steuersystem umfasst, wodurch der Steuerbefehl für ein Leitwerk verwendet werden kann.

9. Vorrichtung nach Anspruch 8, wobei das Steuersystem elektrisch ist und die Mittel zur Bestimmung des Steuerparameters mit diesem verbunden sind.

10. Vorrichtung nach einem der Ansprüche 8 oder 9, wobei das Steuersystem mit einem Steuerorgan wie dem Steuerknüppel eines Luftfahrzeugs und einem Leitwerk wie einem Querruder eines Luftfahrzeugs verbunden ist.
